(19) Europäisches Patentamt
European Patent Office
Office européen des brevets

(11) Publication number: 0 448 327 A2

(12) **EUROPEAN PATENT APPLICATION**

(21) Application number: 91302319.8

(51) Int. Cl.$^5$: G06F 15/21

(22) Date of filing: 18.03.91

(30) Priority: 19.03.90 JP 67031/90
17.10.90 JP 276287/90

(43) Date of publication of application:
25.09.91 Bulletin 91/39

(84) Designated Contracting States:
FR GB

(71) Applicant: HITACHI, LTD.
6, Kanda Surugadai 4-chome
Chiyoda-ku, Tokyo 100 (JP)

(72) Inventor: Kishi, Mari
11-4, Kaminoge-3-chome
Setagaya-ku, Tokyo (JP)

Inventor: Eguchi, Ryoji
1376, Suenaga
Takatsu-ku, Kawasaki-shi (JP)
Inventor: Takadachi, Masato
320-1, Ozenji, Asao-ku
Kawasaki-shi (JP)
Inventor: Mimura, Hirokazu
15-2, Higashikawashimacho
Hodogaya-ku, Yokohama-shi (JP)
Inventor: Takahashi, Noriyuki
Hitachi Sakai Shataku
256, Hiraokacho, Sakai-shi (JP)

(74) Representative: Calderbank, Thomas Roger et al
MEWBURN ELLIS 2 Cursitor Street
London EC4A 1BQ (GB)

(54) **Work scheduling method and system.**

(57) In an information processing apparatus having a computer and an internative terminal, a work sheet corresponding to work to be performed next is displayed on the basis of a relation of work routine formation and work sheet information for developing a system program so as to navigate the work, and a supporting tool is activated on the basis of a relation between the work routine and the supporting tool so as to generate a related specification.



Jouve, 18, rue Saint-Denis, 75001 PARIS

FIG. 1

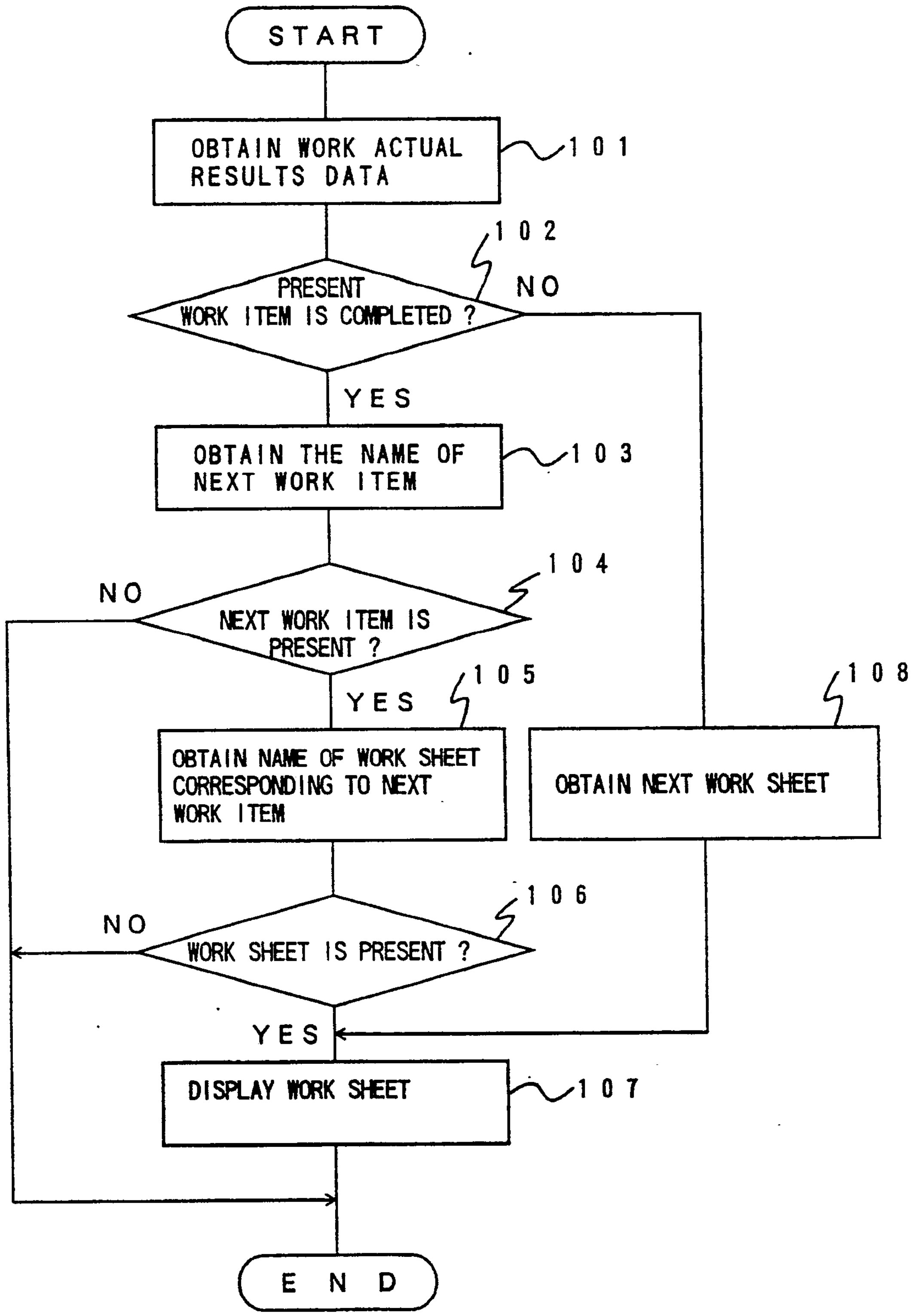

START
OBTAIN WORK ACTUAL RESULTS DATA
101
102
PRESENT WORK ITEM IS COMPLETED ?
NO
YES
OBTAIN THE NAME OF NEXT WORK ITEM
103
104
NO
NEXT WORK ITEM IS PRESENT ?
YES
105
OBTAIN NAME OF WORK SHEET CORRESPONDING TO NEXT WORK ITEM
108
OBTAIN NEXT WORK SHEET
106
NO
WORK SHEET IS PRESENT ?
YES
DISPLAY WORK SHEET
107
END

# SPECIFICATION DEVELOPMENT SUPPORTING METHOD BY WORK NAVIGATION AND SYSTEM THEREFOR

The present invention relates to a development supporting method for automatically generating a specification through work guidance in system program development and a system for implementing the method.

As a conventional technique, for example, Japanese Patent Unexamined Publication JP-A-61-194532 discloses a system for process management in software development, which comprises a process management program for setting a software generating process and a production environment, a development scenario program for indicating a software generating routine and supporting the software production in accordance with the software generating process and production environment set above, and for collecting actual results of the software production, a data base storage means for storing the setting information of the process management program and the actual results of collection of the development scenario program, and a products-storage means for storing software products produced through the support by means of the development scenario program or the like.

Further, in the lecture papers in the 30th (the first term of 1985) national meeting of the Information Processing Society of Japan, pp. 583 - 596, shown is a system in which, for example, forms which are structures of specifications corresponding to the respective processes are related with each other through a supporting tool for generating a specification so that a proper form for every process is outputted.

Further, conventionally, there has been a design supporting method in which items to be described in specifications are related with each other among the specifications and when the contents of any item described in the specifications are changed positions in the specification which may be affected by the change are analyzed.

Further, as described in the "User Interface in the Software multimedia Age", pp. 199 - 200, published on July 28, 1989 as an additional issue of Japanese periodical "Nikkei Computer", there has been a method in which, in a hypertext, a relation between specifications is designated by a work called a link every time a specification is prepared.

The above conventional technique relates to a process management system. In this system, for example, a process of software production such as system design, program design, program production, or the like and a software production environment such as files, tools or the like to be used are set, actual results are collected, and the information thereof is stored, but the work is not automatically navigated on the basis of such information.

Further, a form, such as a structure of a specification, to be used for work is related with a process through a supporting tool for preparation of a specification. Accordingly, when the process is to be changed, it has been necessary to change not only the form corresponding to the process but also the tool per se. It has been therefore impossible to change the form independently.

Thus, the tool is used merely to output a form sheet, and work is required to perform manually and the order of preparation of a sheet is required to set manually.

Further, navigation for work is not performed in preparation of a specification, while only when the contents of an item described in a specification is changed, navigation for work and indication of the portion affected by the change are performed in accordance with the definition of the relation among specifications.

Further, the relation among specifications is designated by a work called a "link" every time a specification is prepared and even when a plurality of specifications of the same type are to be prepared it has been necessary to designate the relation again and again every time each specification is prepared.

It is therefore a preferred aim of the present invention to provide a development supporting method and an implementing system therefor, in which information related to the routines or procedures to be used in system program development, work items, structures, steps, progress status, work sheets which are frames of respective specifications,and supporting tools for preparation of specifications, may be stored, so that work navigation is performed for a user on the basis of the stored information and the supporting tool may be automatically activated on the basis of the relation between the work routine and the supporting tool to thereby generate a relational specification.

Preferably, in addressing the above aim, and in accordance with one feature of the present invention, a work sheet corresponding to a work to be performed next is displayed on the basis of a relation between the work sheets and work routines to be used in a development work in system program development, a supporting tool is automatically activated on the basis of information on the relation between the work routines and the supporting tools, so that a second specification related with a first specification is produced from the first specification by making a reference to work sheets and definition information which defines the relation among a plurality of work sheets.

According to another feature of the present invention, pieces of information related to the routines to be used in a development work in system program development, the work items, the structure, the steps, the progress status, the work sheets and the supporting tools respectively are set and stored, and navigation on a routine to be performed next is performed for an user through automatic display of a work sheet and automatic actuation of a supporting tool on the basis of the stored information.

That is, it is possible that work sheet definition information for use in a development work in system program development and the inter-worksheet relational definition information are set and stored, and work navigation is performed for an user through automatic specification display and automatic specification preparation. In this case, since definition of work sheets and definition of the relation among work sheets are made with respect to the type called a work sheet which defines the frame of a specification, it becomes unnecessary to make the same relational definition again and again with respect to various specifications of one and the same type.

Other features and advantages of the present invention will be apparent from the following description taken in connection 'with the accompanying drawings, wherein:

Fig. 1 is a flow chart showing an embodiment in which work navigation is performed on the basis of the information with respect to the relation between the routines and work sheets;

Fig. 2 is a block diagram showing the system configuration for implementing the work navigation system;

Figs. 3A and 3B show various pieces of information to be stored as work information;

Fig. 4 is a diagram for explaining the information management method in the case where the routines are parallel to each other;

Fig. 5 is a block diagram showing the system configuration in which a work information setting means is additionally provided;

Fig. 6 is a flow chart showing the work navigation system in the case where the routine is set by establishing the relation among work sheets;

Fig. 7 shows information for storing inter-worksheet relational information as the work information;

Fig. 8 is a flow chart showing the work navigation system in the case where the information for establishing the relation between working partners and work sheets is added;

Fig. 9 shows information for storing information between work sheets for every working partner as the work information;

Fig. 10 shows information for storing work item completion conditions as the work information;

Fig. 11 is a flow chart showing the work navigation system in the case where the information of the step completion conditions is added;

Fig. 12 shows information stored as the work information;

Figs. 13A and 13B are views showing specific examples of the scene displayed in work navigating;

Fig. 14 is a configuration diagram showing an embodiment of the present invention;

Figs. 15A, 15B, and 16 are views showing examples of the specification;

Fig. 17 is a flow chart showing processing of an embodiment of the present invention;

Fig. 18 is a view showing a link information table of the output information list which is an example of the work sheet definition information;

Fig. 19 is a view showing a specification preparation information table which is an example of the work sheet definition information;

Fig. 20 is a flow chart in which processing is partly added in the flow chart of Fig. 17;

Fig. 21 is a view showing a registration scene of a specification which is being prepared;

Fig. 22 is a view showing a scene for selecting a lower rank specification to be prepared;

Fig. 23 is a configuration diagram showing an embodiment of the present invention;

Fig. 24 is a view showing an example of a specification editing scene;

Fig. 25 is a view showing an example of a menu scene on which a user can request a desired one of related specifications;

Fig. 26 is a view showing an example of a scene on which a related specification is displayed;

Fig. 27 is a flow chart showing a flow of processing of an embodiment of the present invention;

Fig. 28 is a view showing an example of a work sheet relational definition table; and

Fig. 29 is a flow chart showing the flow of processes in which a process is added to the flow chart of Fig. 27; and

Fig. 30 is a view showing an example of a message scene.

Referring to the accompanying drawings, embodiments of the present invention will be described in detail hereunder.

Fig. 1 is a flow chart showing an embodiment of the processing routine according to the present invention, and Fig. 2 is a block diagram showing the configuration of the system according to the present invention.

In Fig. 2, the system is provided with an input device 11 such as a key board, a mouse, or the like, a display unit 21, a CPU 22 having a work navigation supporting section for generating instructions on working, a work information storage device 23 which is an external storage device for storing information necessary for work navigation, and a memory 24 for storing data.

The work information storage device 23 manages work information by using, as shown in Fig. 3A (3B), a work item table (Table 3a) for holding work items, a routine table (Table 3b) for holding routines to be used in development working, a work sheet table (Table 3c) for holding work sheets defining the frame of a specification, a relational table (Table 3d, Table 3e, Table 3f) for indicating the relation between the work items and work sheets. Figs. 13A and 13B are specific examples of scenes of display.

First, referring to Figs. 1, 2, 3A, 3B, 13A and 13B, a first embodiment will be described in detail hereunder.

In Fig. 1, when the work-navigation supporting section 22 is supplied with a work completion instruction judged from the name of an work item which is completed at present, the name of work sheet which is in a completed state at present, or the degree of completeness of a work sheet which has been stored at present (the step 101), the work-navigation supporting section 22 judges whether it is possible to make the operation advance to the next work item or not on the basis of the work item vs. work sheet relational table (Table 3d, Table 3e, Table 3f) (the step 102). If the judgement proves that the work sheets (311, 312, 313) to be executed for the work item 1 (301) for example in the Table 3b have been completed, the work-navigation supporting section 22 obtains the work item 2 (302) to be executed in accordance with the routine table (Table 3b) shown in Fig. 3A (the step 103).

If there exists any work item to be executed next (the step 104), the work-navigation supporting section 22 obtains the work sheet name (314) corresponding to the work item from the work item vs. work sheet relational table (Table 3d) (the step 105). If there exists any work sheet corresponding to the work item (the step 106), the work-navigation supporting section 22 activates the display unit 21 to display the work sheet like a scene 13b as illustrated in Fig. 13B (the step 107). If the work sheet for the present work item is not yet completed in the step 102, the work-navigation supporting section 22 obtains a work sheet to be formed from the work item vs. work sheet relational table (Table 3d, Table 3e, Table 3f) (the step 108) and activates the display unit 21 to display the work sheet like a scene 13a as illustrated in Fig. 13A (the step 107).

It may be possible to display corresponding work sheets collectively, to display work sheets with the relation of order based on the information of the relation among the work sheets as shown in the Table 3e of Fig. 3B, to display work sheets one after one at random based on the information indicating that the work sheets are parallel as shown in the Table 3f of Fig. 3B when it is not necessary to establish the order among the work sheets, and so on.

Further, in the case where the routines are not serial, it is possible to perform work navigation of parallel routines if pieces of information such as a work item 41, a pointer 42 indicating the next working, etc., as shown in Fig. 4, are stored.

Furthermore, it is possible to freely set the order among work sheets in accordance with the form of the project.

Although the work navigation is performed by automatically displaying a work sheet in accordance with a routine on the basis of the information of the relation between work routines and work sheets in the above embodiment, it is possible that a supporting tool or the like may be automatically activated in accordance with a routine on the basis of the information of the relation between work routines and supporting tools.

Next, referring to Fig. 5, a second embodiment will be described hereunder.

In this embodiment, means for setting work information as shown in Figs. 3A and 3B is additionally provided in the first embodiment.

In Fig. 5, of work information is set through a key board 55, a work environment setting section 54 stores the information in a work information shortage device. On the basis of this information, work navigation is performed in the same manner as in the first embodiment and display is made on a display unit 51. Thus, a user can freely set or change the work routine and/or work contents.

Next, referring to Figs. 6 and 7, description will be made as to a third embodiment in which the relation among work sheets is established to thereby set a work routine.

The work information storage device 23 manages Table 3c of Fig. 3A and Table 7a of Fig. 7. If the name of a work sheet with respect to the working which has been completed by an worker at present is inputted or the data of actual results of work are inputted on the basis of the conclusion made by a tool with respect to completed work sheets in accordance with the degree of completion of work sheets stored at present (the step 601), a work sheet to be displayed next is obtained on the basis of the inter-worksheet relational table (Table 7a) (the step 602).

If there exists any work sheet to be displayed (the step 603), the work sheet is displayed for a person in charge of the working or a working partner (the step 604). As the inter-worksheet relational information, not only the information has a relation with a work sheet which must have been completed as a premise like the Table 7a of Fig. 7 but it is possible to display work sheets with the order established among the work sheets like the Table 3e of Fig. 3B.

Next, referring to Figs. 8 and 9, a fourth embodiment will be described. In this embodiment, the relation between working partners and work sheets is additionally provided so that a work sheet corresponding to a working partner is displayed.

Table 9a and Table 9b of Fig. 9 are tables to be added to those in the first embodiment.

In this embodiment, the additionally executed process is such that when an identifier of a working partner is inputted by the working partner or information for identifying the working partner is supplied from a tool before the process of the first embodiment (the step 801), a work sheet corresponding to the working partner is extracted on the basis of the working partner vs. work sheet relational table (Table 9b) and written in a table of work sheets by working partners (Table 9c).

By executing the process of the first embodiment by using the Table 9c of Fig. 9, the work sheet to be prepared next by the working partner can be displayed.

Although the case where the order of preparation of work sheets is serial is shown in this embodiment, it is possible to register a plurality of premise work sheets as illustrated in the Table 9b of Fig. 9.

Further, it is possible to additionally execute the process of this embodiment prior to execution of the process of the above-mentioned third embodiment.

Next, a fifth embodiment will be described hereunder. In this fifth embodiment, a step completion condition for judging work item completion is added to the process of the first embodiment to thereby navigate the work.

The process of work item completion judgment to be added to the first embodiment will be described by use of Figs. 2, 3A, 3B, 10 and 11.

The table of Figs. 3A, 3B and 10 are stored in the work information storage device 23 of Fig. 2. The work-navigation supporting section 22 obtains the data of actual work results such as the work sheet number corresponding to the work which is completed (the step 1101), and obtains the work item number corresponding to the work sheet number from the Table 3d to make the obtained work item be the present one (the step 1102).

The work-navigation supporting section 22 compares the work sheet number with the work item completion work sheet number in the work item completion condition table (Table 10a) (the step 1103), and if the two are coincident with each other (step 1104), the work-navigation supporting section 22 regards that the work item has been completed (step 1105) and registers the completed work item as work item completion information (the step 1106). The process of the first embodiment is executed in response to this information. If there is no coincidence, the work-navigation supporting section 22 registers the information obtained in the step 1102 as work item completion information.

Although the completion condition with respect to the work item has been described above in this embodiment, it is possible that the degree of completion of each work item is set in addition to the completion condition. Thus, according to this embodiment, the work item completion can be attained more strictly.

Next, a sixth embodiment will be described hereunder. In this sixth embodiment, means for storing such information as shown in the Table 12 of Fig. 12 into the work information storage device 23 of Fig. 2 is additionally provided so that the work navigation is performed in the same manner as in the first embodiment on the basis of this information. Thus, it is possible to perform the work navigation for a user on the basis of the stored information without externally reading-in any actual results information.

As described above, it is possible to easily perform the setting of a free development work standard in accordance with the form of a project, the making of the work standardization thorough, the uniformalizing of work quality, the improving of work efficiency by work navigation based on work progress information, and the management of the project.

Next, referring to the drawings, an embodiment in which a supporting tool finally determined by work navigation is activated to thereby produce a related specification.

That is, description will be made as to an embodiment in which definition information defining the type of a specification which is called a work sheet in a system for supporting software designing is provided so that a specification related with a certain specification is produced from the certain specification on the basis of definition information defining an inter-worksheet relation to thereby automatically post necessary work item contents from the original specification.

Fig. 14 shows a functional configuration view of this embodiment. Specification edition 1401 is a process in which information supplied from an input device 11 is stored in a specification file 12. The specification file 12 includes data for a specification which is an object of design, the data being stored in the memory 24 or in the external storage 23. Definition information reference 1402 is a process in which access is made to work sheet definition information 13 in which work sheets per se and an inter-worksheet relation are defined from the specification prepared in the specification edition 1401 to thereby take out necessary information. The work sheet definition information 13 is stored in the memory 24 or in the external storage device 23. In the related specification production 1403, a related specification to be produced is produced on the basis of the specification file 12 and the work sheet definition information 13 and stored in the specification file 12. The respective processes 1401, 1402, and 1403 are executed by the CPU 22 in accordance with the program stored in the memory 24.

This embodiment will be described more in detail by use of Figs. 15, 16, 17 and 18. The reference numeral 1501 in Fig. 15 designates an output information list which is an example of a specification to be prepared at the time of designing, and the reference numeral 1601 in Fig. 16 designates an example of a batch mapping specification which is a related specification of the output information list. Fig. 17 is a flow chart showing the flow of the process of this embodiment, in which the respective processes 1401, 1402 and 1403 of Fig. 14 are expressed by a single flow of process. Fig. 18 shows an example of a link table of the output information list which is a part of the work sheet definition information 13 of Fig. 14. The batch mapping specification is prepared for each of the batch mappings stated in the output information list. The step 1701 is a process in which upon completion of preparation of the specification shown in Fig. 15, "COMPLETION" is selected from a command menu 1502 by means of a mouse to thereby receive specification completion information. In the step 1402, reference is made to the work sheet definition information 13 to thereby obtain information with respect to a related specification by use of an output information list link information table 1801 of Fig. 18. In the step 1703, reference is made to the work sheet definition information 13 to thereby take out a work sheet of a lower rank specification to be produced to prepare a frame of the specification. In the step 1704, the contents of items to be taken over from an upper rank specification onto the frame of the specification produced in the step 1703 are posted from the upper rank specification. Fig. 16 shows an example of a batch specification produced on the basis of the output information list. The respective contents of output information name 1503, output means 1504, output cycle 1505, form size 1506, and number of copies 1507 in Fig. 15 are automatically posted into the respective items of summary 1602, output media 1603, period 1605, form size 1604, and number of copies 1606 in Fig. 16, respectively.

Although the timing when the preparation of a specification has been completed is the timing at which a lower rank specification is to be prepared in this embodiment, it is possible that the timing when a lower rank specification is to be prepared is defined as a rule by a user. An embodiment of the case where the timing is defined by a user will be described by use of Figs. 19, 20, 21 and 22. Fig. 19 is a specification producing information table and Fig. 20 is a flow chart for explaining this embodiment, in which a part of the process 1701 of Fig. 17 is developed. Fig. 21 is a status registration scene 2101 displayed on the display unit 24, and Fig. 22 is a selection scene of a lower rank specification. A specification producing information table 1901 of Fig. 19 is defined in advance as a work sheet definition information by a user and stored in the work sheet definition information file 13. The step 2001 is a process in which a user is made to register the status of the specification from the status registration scene 2101 of Fig. 21. In the step 2002, the specification status 2101 entered in the step 2001 is compared with the lower rank specification producing timing registered in advance by a user in the table 1901. As a result of comparison, if the condition allows to produce a lower rank specification as shown in this example, the routine advances to the step 1402. If not so, on the contrary, the process is terminated. When a lower rank specification is produced, a specification to be produced may be selected in the step 2003 by providing such a lower rank specification selection scene as shown in Fig. 22. The work sheet kind shown in Fig. 22 is for classifying the lower rank specifications to be produced by work sheets, and the specification name indicates the kind of specification produced from each work sheet.

Next, description will be made with respect to an embodiment in which a specification related with a certain specification is displayed when the certain specification is produced on the basis of the work sheet definition information file 13.

Fig. 23 is a functional configuration view of this embodiment, in which the processes 1401, 1402 and 1403 of Fig. 14 are rearranged. Specification edition 1401 is the same process as that designated by 1401 in Fig. 14. In the process of command reception 2301, a command entered through an input device 11 for requesting to make reference to related specifications is received. Definition information reference 1402 is the same process as that designated by 1402 in Fig. 14. Associated specification list 2302 is a process in which a list of related specifications expected to be referred to by a user is displayed on the display unit 24 as a result of the process of definition information reference 1402. List selection reception 2303 is a process in which user's selection, through the input device 11, of a related specification desired by the user to refer to is received. Associated specification display 2304 is a process in which the related specification accepted in the related specification display 2304 is taken out from a specification file 12 and displayed on the display unit 24.

The embodiment will be described more in detail by use of Figs. 24, 25, 26, 27, and 28. Fig. 24 is a data flow diagram showing an example of the specification edition scene. Fig. 24 illustrates an example of an original specification for looking for a related specification. Fig. 25 is a menu scene on which a user can request a related specification desired by the user to refer to, Fig. 26 is a scene in which the related specification is displayed, and Fig. 27 is a flow chart showing the flow of process of this embodiment, in which the processes 2101, 2302, 2303 and 2304 of Fig. 23 are rewritten. Fig. 28 shows an example of a work sheet relational definition table.

The step 2701 in Fig. 27 is a process in which a related specification reference request is accepted when a user issues the request by designation a "HELP" command on a command menu 2501 shown in a part (a) of Fig. 25, for example, in the condition that such a specification edition scene 2401 is shown in Fig. 24 is displayed. In the step 2702, a table in which such related specifications as shown in Fig. 28 are listed is taken in. In the step 2703, the names of the related specifications obtained in the step 2702 are displayed in the display unit in such a manner as the list menu 2502 of the diagram (b) of Fig. 25. In the step 2704, one of the related specifications which is selected by a user and which is desired by the user to refer to is accepted, and in the step 2304, the specification accepted in the step 2705, for example, "TERM DICTIONARY" is displayed in the display unit in such a manner as the example of Fig. 26. Although the process of related specification reference is carried out in response to a request issued by a user in this embodiment, it is possible to change the arrangement such that the step 2701 is omitted and the related specification list menu 2502 is displayed suitably at the time of edition of a specification, or such that the steps 2701, 2703 and 2704 are omitted and a related specification which is desired by a user to refer to at the time of edition of a certain specification is defined in advance by the user so that the defined related-specification is displayed continuously during the time of edition of the certain specification.

There is a case where the work becomes more efficient if the contents of the related specification displayed in the above embodiment is posted into the specification which is being edited. An embodiment of such a case will be described by use of Figs. 24, 26, 29 and 30. Fig. 29 is a flow chart showing the flow of process in this embodiment, and Fig. 30 is a message scene for instructing operation to a user. In Fig. 29, the step 2901 follows the step 2304 in Fig. 27. In the step 2901, a user indicates a posting request 2601 and a selected one of the related specifications 2603 in the related specification scene of Fig. 26. In the step 2905, the user designates the destination region of posting, and in the step 2904, the designated destination region is accepted. In the step 2906, the result of posting is displayed in the scene in edition as shown in 2402 of Fig. 24.

According to the present invention, the work sheet definition information and inter-worksheet relational definition information which are used in the development work in system development can be set and stored, and navigation can made for a user by automatic display and automatic preparation of a specification on the basis of the stored information.

Particularly, if an upper rank specification is prepared, a necessary lower rank specification is produced and information to be transferred is automatically taken over, thereby making it possible to realize the setting of free development work standard in accordance with the form of a project, the thoroughness of work standardization, and the uniformalizing of work quality.

Since the inter-specification relational definition is defined as a relation between work sheets each of which sheets a type of a specification, it is not necessary to make relational definition again and again among specifications which are the same in type with each other. Further, since a related specification can be referred to immediately in edition of a certain specification, the work efficiency can be improved. Further, a necessary item can be posted from the related specification which is being referred to, an erroneous input can be prevented in specification preparation.

## Claims

1. A development supporting system comprising:

   storage means (23) for storing work routine information for developing a system program and work sheet information for defining frames of specifications.

   work navigation means (21, 22) coupled to said storage means for navigating work by means of a work sheet corresponding to the work to be performed next on the basis of a relation between the work routine information and the work sheet information stored in said storage means; and

   activation means (22) responsive to said navigation means for activating a supporting tool for preparing a related specification in accordance with an instruction from said work navigation means.

2. A development supporting system comprising:

   storage means (23) for storing work routine information for developing a system and work sheet information for defining frames of specifications;

   display means (21) for displaying a work sheet corresponding to the work to be performed next on the basis of a relation between the work routine information and the work sheet information stored in said storage means;

   input means (11) for inputting response information in accordance with the work sheet displayed on said display means; and

   activation means (22) for activating a supporting tool for preparating a related specification in accordance with the response information inputted through said input means.

3. A development supporting system according to Claim 2, in which said supporting tool produces the related specification on the basis of said response information, said work routine information and said work sheet information.

4. A development supporting system comprising:

   storage means (23) for storing work routine information for developing a system, work sheet information for defining frames of specifications, and definition information which defines a relation between a plurality of work sheets;

display means (21) for displacing a work sheet corresponding to the work to be performed next on the basis of a relation between the work routine information, the work sheet information and the definition information stored in said storage means;

input means (11) for inputting response information in accordance with the work sheet displayed on said display means; and

activation means (22) for activating a supporting tool for preparing a related specification in accordance with said response information inputted through said input means.

5. A development supporting system according to Claim 4, in which said supporting tool includes a production means for producing a second specification related with a first specification on the basis of said response information, and said work sheet information, from said first specification.

6. A development supporting system according to Claim 5, in which said production means includes a posting means for posting the contents of a first item into a second item on the basis of definition information defining correspondency between said first item described in said first specification and said second item described in said second specification.

7. A development supporting system according to Claim 6, in which said first specification is an upper one than said second specification and has information taken over to said second specification.

8. A work navigation method comprising:

a first step of storing work routine information for developing a system program and work sheet information for defining frames of specifications;

a second step of navigating work by means of a work sheet corresponding to the work to be performed next on the basis of a relation between the work routine information and the work sheet information stored in said first step; and

a third step of activating a supporting tool for preparing a related specification in accordance with an instruction from said second step.

9. A work navigation method comprising:

a first step of storing work routine information for developing a system and work sheet information for defining frames of specifications;

a second step of displaying a work sheet corresponding to the work to be performed next on the basis of a relation between the work routine information and the work sheet information stored in said first step;

a third step of inputting response information in accordance with the work sheet displayed in said second step; and

a fourth step of activating a supporting tool for preparing a related specification in accordance with the response information inputted through said input means.

10. A work navigation method according to Claim 9, in which said supporting tool produces the related specification on the basis of said response information, said work routine information and said work sheet information.

11. A work navigation method comprising:

a first step of storing work routine information for developing a system, work sheet information for defining frames of specifications, and definition information which defines a relation between a plurality of work sheets;

a second step of displaying a work sheet corresponding to the work to be performed next on the basis of a relation between the work routine information, the work sheet information and the definition information stored in said first step;

a third step of inputting response information in accordance with the work sheet displayed in said second step; and

a fourth step of activating a supporting tool for preparing a related specification in accordance with said response information inputted in said third step.

12. A work navigation method according to Claim 11, further comprising a fifth step in which said supporting tool activated in said fourth step produces a second specification related with a first specification on the basis of said response information, and said work sheet information, from said first specification.

13. A work navigation method according to Claim 12, in which said fifth step includes a sixth step of posting the contents of a first item into a second item on the basis of definition information defining correspondency between said first item described in said first specification and said second item described in said second specification.

14. A work navigation method according to Claim 13, in which said first specification is an upper one than said second specification and has information taken over to said second specification.

FIG. 1

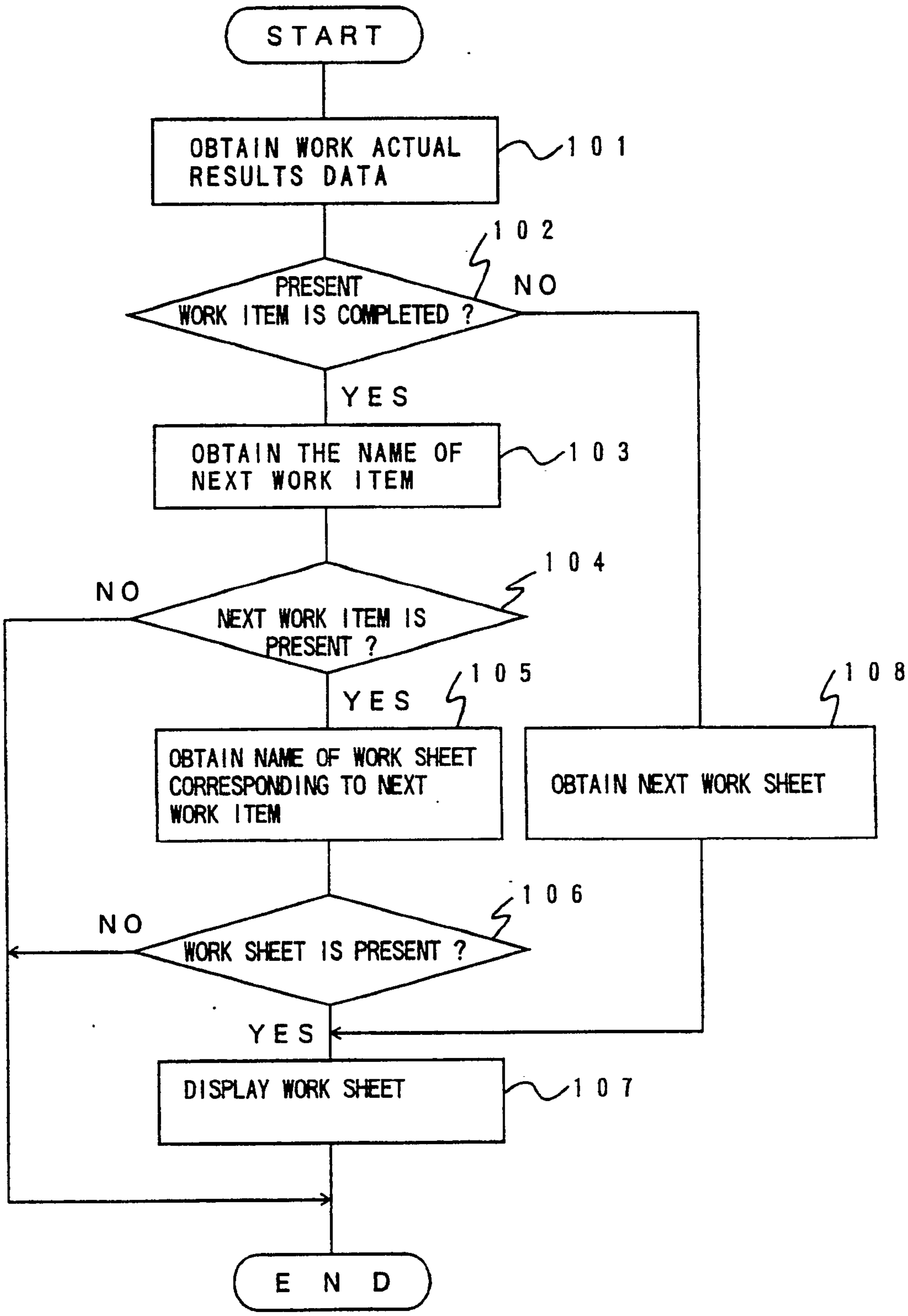
START
OBTAIN WORK ACTUAL RESULTS DATA
101
102
PRESENT WORK ITEM IS COMPLETED ?
NO
YES
OBTAIN THE NAME OF NEXT WORK ITEM
103
104
NO
NEXT WORK ITEM IS PRESENT ?
YES
105
OBTAIN NAME OF WORK SHEET CORRESPONDING TO NEXT WORK ITEM
108
OBTAIN NEXT WORK SHEET
106
NO
WORK SHEET IS PRESENT ?
YES
DISPLAY WORK SHEET
107
END

FIG. 2

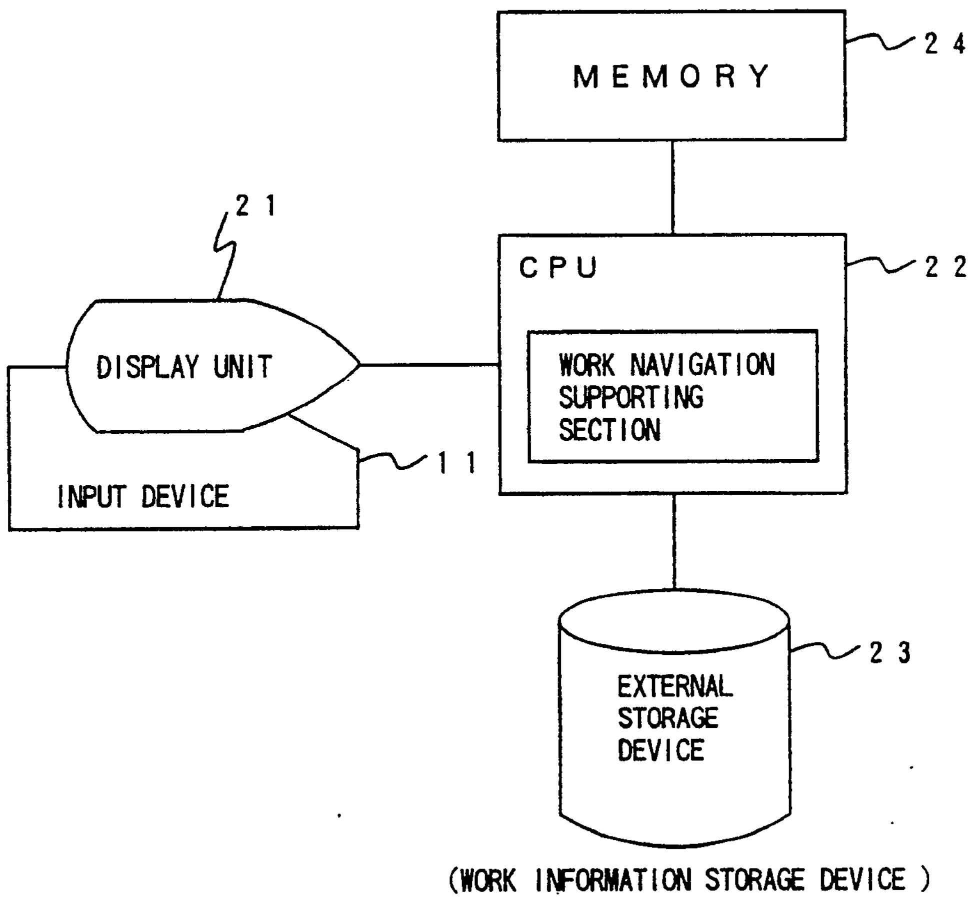
MEMORY
24
21
CPU
22
DISPLAY UNIT
WORK NAVIGATION
SUPPORTING
SECTION
11
INPUT DEVICE
23
EXTERNAL
STORAGE
DEVICE
(WORK INFORMATION STORAGE DEVICE )

# FIG. 3 A

TABLE 3a

| WORK ITEM No. | CONTENTS OF WORK ITEM |
|---|---|
| 1 | DRAFTING OF WORK PLAN |
| 2 | GRASPING OF CURRENT SYSTEM |
| ⋮ | ⋮ |

TABLE 3b

| WORK NAME | ROUTINE 301 | 302 | | | | |
|---|---|---|---|---|---|---|
| SYSTEM ANALYSIS | 1 | 2 | 3 | 5 | 7 | 8 | … |
| SYSTEM DESIGN | 21 | 23 | 24 | 25 | 29 | 30 | … |

TABLE 3c

| WORK SHEET No. | WORK SHEET NAME |
|---|---|
| 1. 1 | PROBLEM DEFINITION TABLE |
| 1. 2 | WRITTEN WORK PLAN |
| ⋮ | ⋮ |
| 1. 4 | WRITTEN WORK PLAN OF "SYSTEM ANALYSIS" |
| 1. 5 | BUSINESS LIST |
| ⋮ | ⋮ |

TABLE 3d

| WORK ITEM No. | WORK SHEET No. | |
|---|---|---|
| 1 | 1. 1 | 311 |
| 1 | 1. 2 | 312 |
| 2 | 2. 1 | |
| 1 | 1. 4 | 313 |
| 2 | 1. 5 | 314 |
| ⋮ | ⋮ | |

# FIG. 3 B

TABLE 3e

| DISPLAY ORDER | WORK SHEET No. |
|---|---|
| 1 | 1. 1 |
| 2 | 1. 2 |
| 3 | 1. 4 |
| 4 | 1. 3 |
| ⋮ | ⋮ |

TABLE 3f

| DISPLAY ORDER | WORK SHEET No. |
|---|---|
| 1 | 1. 1 |
| 1 | 1. 2 |
| 1 | 1. 3 |
| ⋮ | ⋮ |

FIG. 4

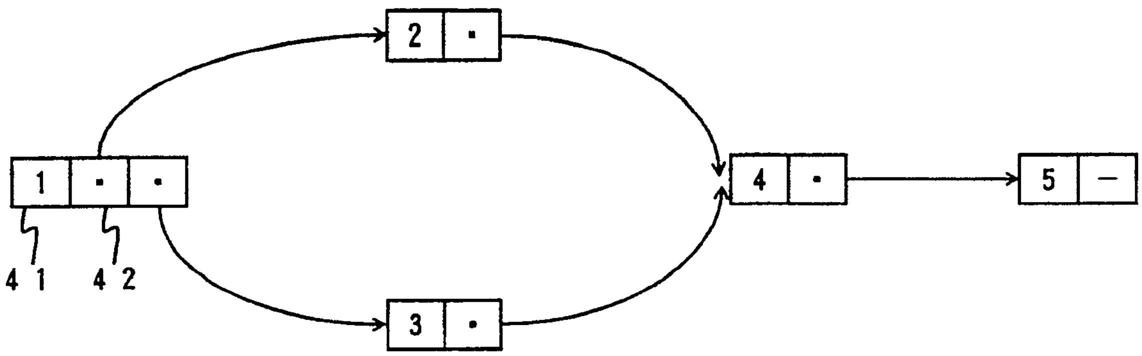


FIG. 12

TABLE 12a

| WORK SHEET No. | WORK SHEET NAME | COMPLETION INFORMATION |
|---|---|---|
| 1 | PROBLEM DEFINITION LIST | COMPLETION |
| 2 | WRITTEN WORK PLAN | INCOMPLETION |
| ⋮ | ⋮ | ⋮ |

FIG. 5

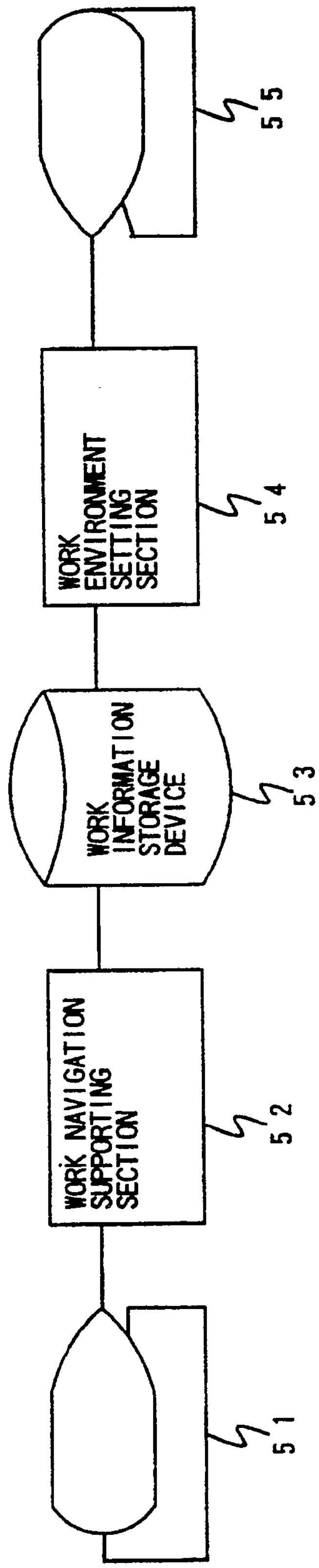
51
WORK NAVIGATION SUPPORTING SECTION
52
WORK INFORMATION STORAGE DEVICE
53
WORK ENVIRONMENT SETTING SECTION
54
55

FIG. 6

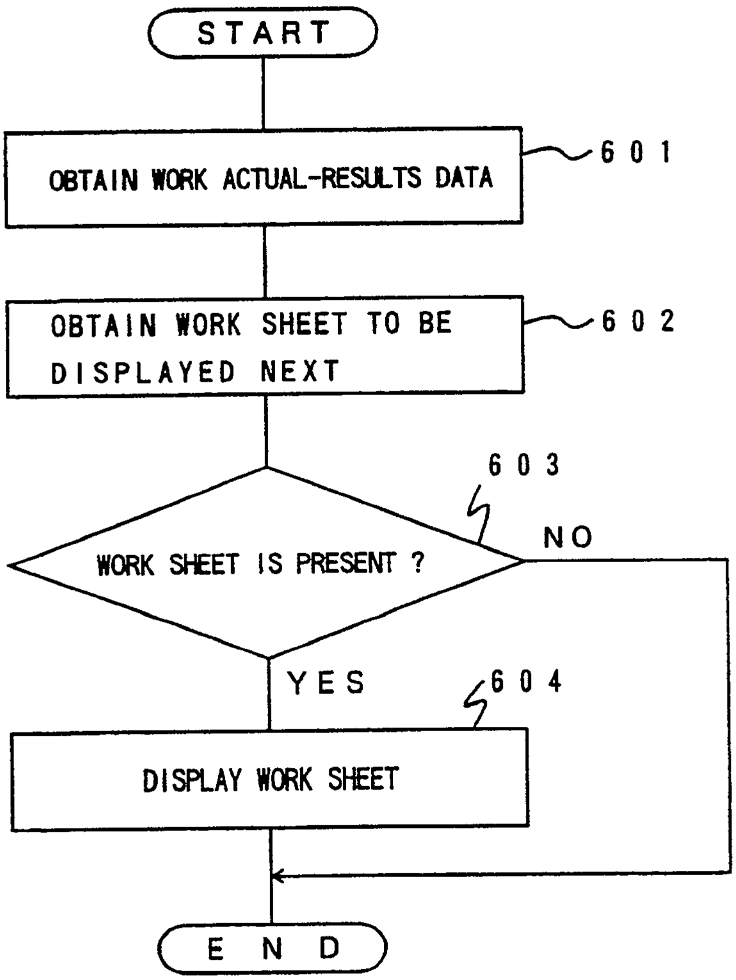
START
OBTAIN WORK ACTUAL-RESULTS DATA
601
OBTAIN WORK SHEET TO BE DISPLAYED NEXT
602
603
WORK SHEET IS PRESENT ?
NO
YES
604
DISPLAY WORK SHEET
END

# FIG. 7

TABLE 7 a

| WORK SHEET No. | PREMISE WORK SHEET No. |
|---|---|
| 1. 1 | |
| 1. 2 | 1. 1 |
| 1. 3 | 1. 2 |
| 1. 4 | 1. 2 |
| ⋮ | ⋮ |

TABLE 7 b

| WORK SHEET No. | PREMISE WORK SHEET No. |
|---|---|
| 1. 1 | |
| 1. 2 | 1. 1 |
| 1. 3 | 1. 2 |
| 1. 4 | 1. 2 |
| ⋮ | ⋮ |

FIG. 8

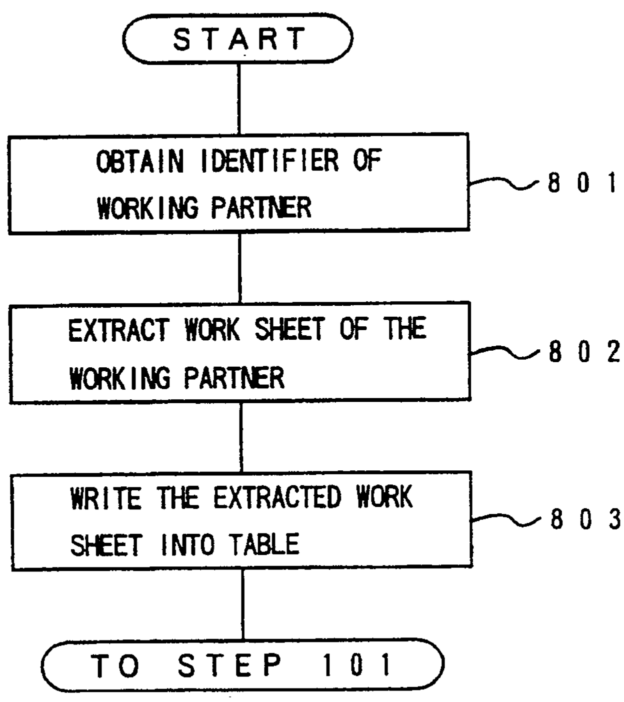
START
OBTAIN IDENTIFIER OF WORKING PARTNER
801
EXTRACT WORK SHEET OF THE WORKING PARTNER
802
WRITE THE EXTRACTED WORK SHEET INTO TABLE
803
TO STEP 101

# FIG. 9

TABLE9a

| WORKING PARTNER ID | WORKING PARTNER |
|---|---|
| 90001 | TANAKA |
| 90002 | SATO |
| 90003 | SUZUKI |
| 90004 | OTA |
| 90005 | MATSUI |
| ⋮ | ⋮ |

TABLE9b

| WORKING PARTNER ID | WORK SHEET No. |
|---|---|
| 90001 | 1. 1 |
| 90002 | 1. 2 |
| 90003 | 1. 1 |
| 90004 | 1. 4 |
| 90005 | 1. 4 |
| ⋮ | ⋮ |

TABLE9C(id=9001)

| WORK SHEET No. |
|---|
| 1. 1 |
| 1. 2 |
| 1. 4 |
| ⋮ |

FIG. 10

TABLE10a

| WORK ITEM No. | WORK-ITEM-COMPLETED WORK SHEET No. |
|---|---|
| 1 | 1. 3 |
| 2 | 2. 6 |
| 3 | 3. 10 |
| ⋮ | ⋮ |

FIG. 11

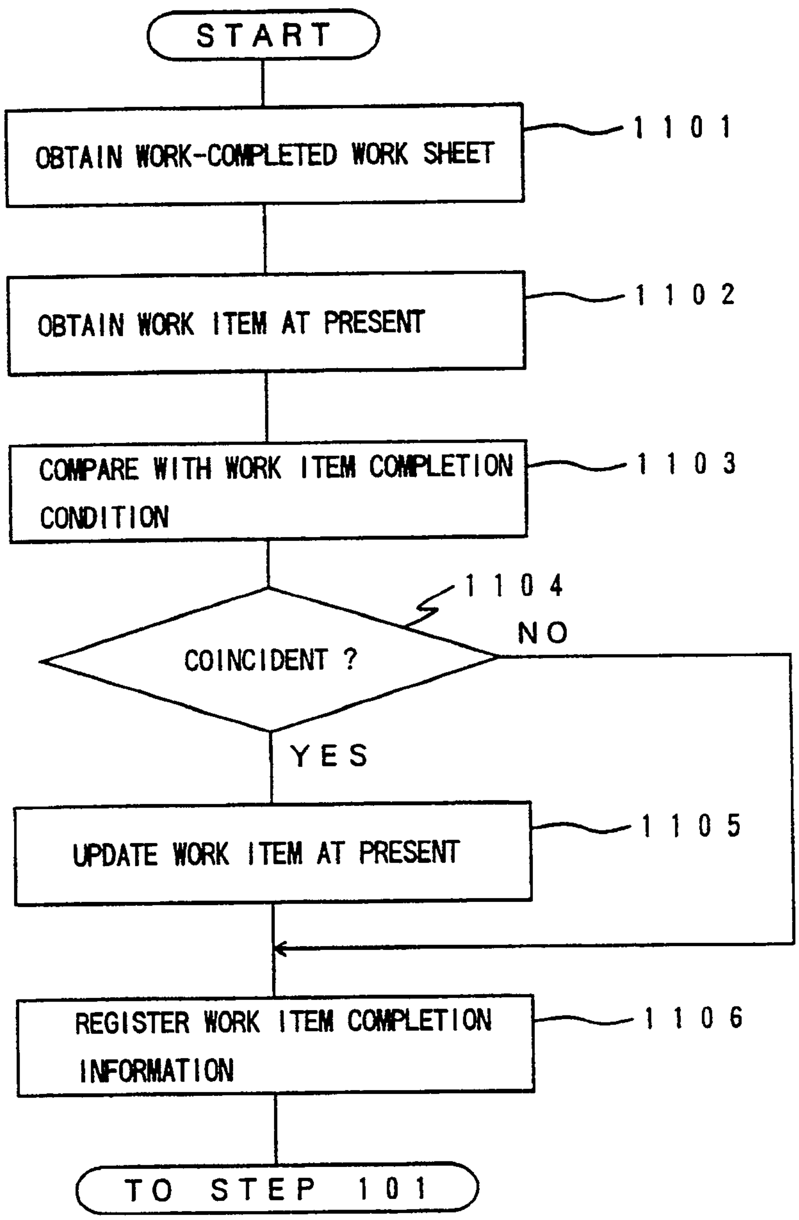
START
OBTAIN WORK-COMPLETED WORK SHEET
1101
OBTAIN WORK ITEM AT PRESENT
1102
COMPARE WITH WORK ITEM COMPLETION CONDITION
1103
1104
COINCIDENT ?
NO
YES
UPDATE WORK ITEM AT PRESENT
1105
REGISTER WORK ITEM COMPLETION INFORMATION
1106
TO STEP 101

FIG. 13 A

SCENE 13a

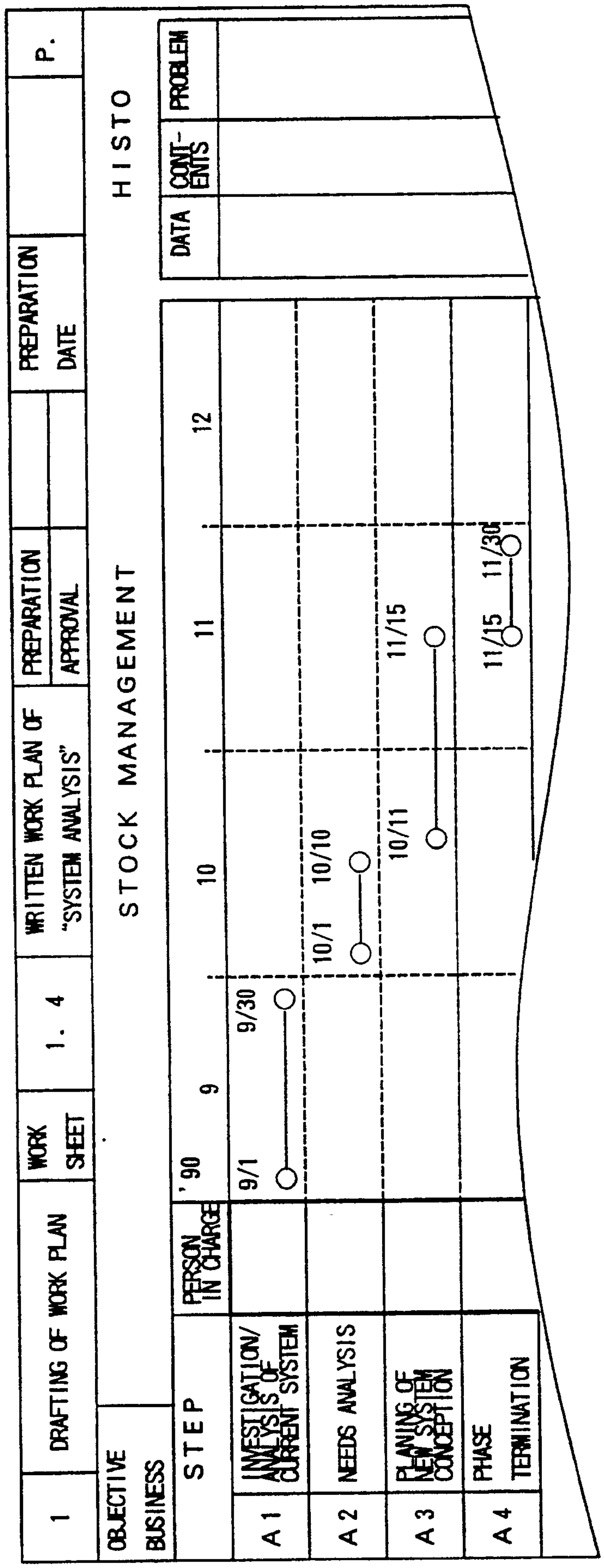

FIG. 13 B

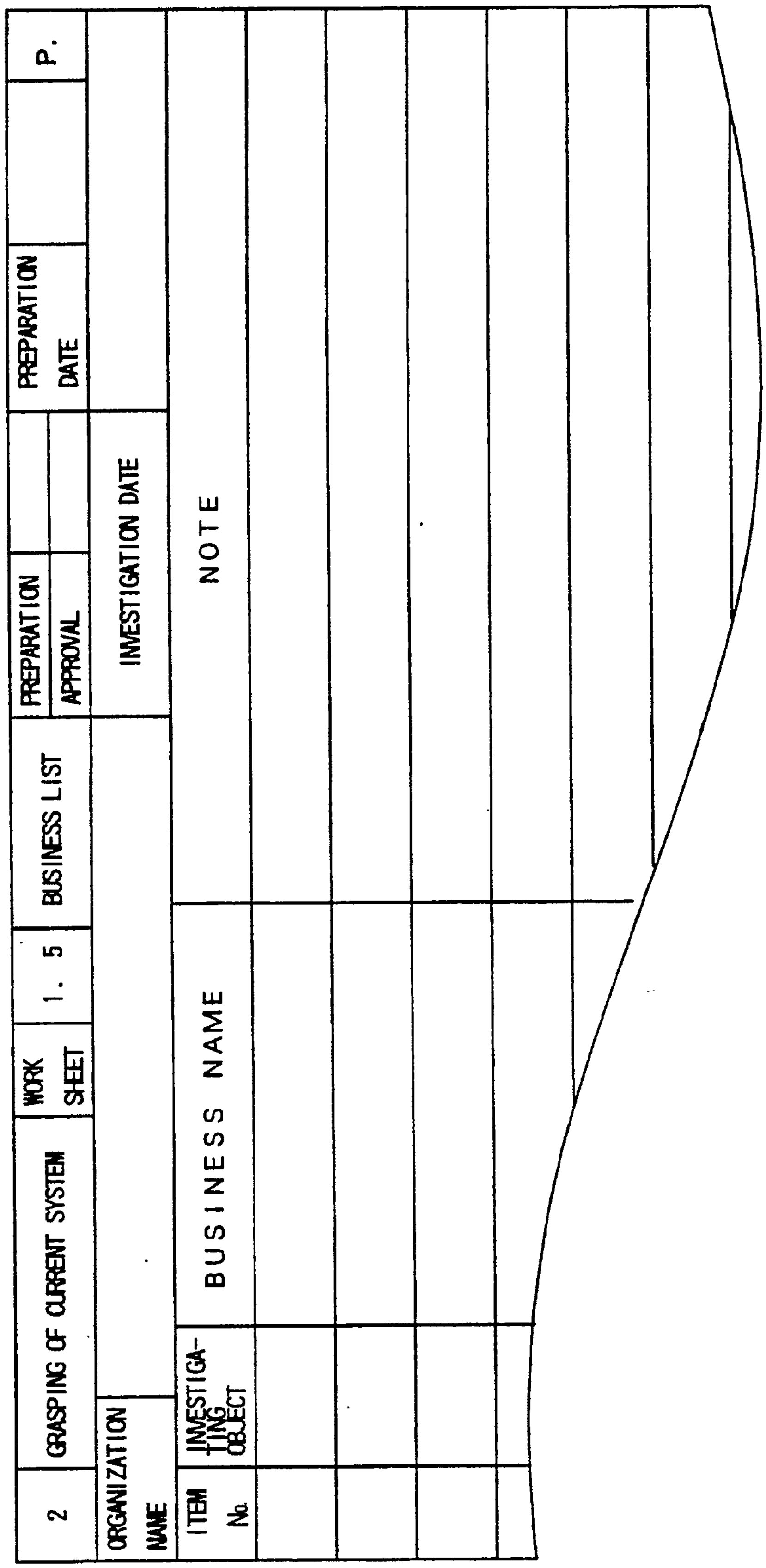


SCENE 13b

FIG. 14

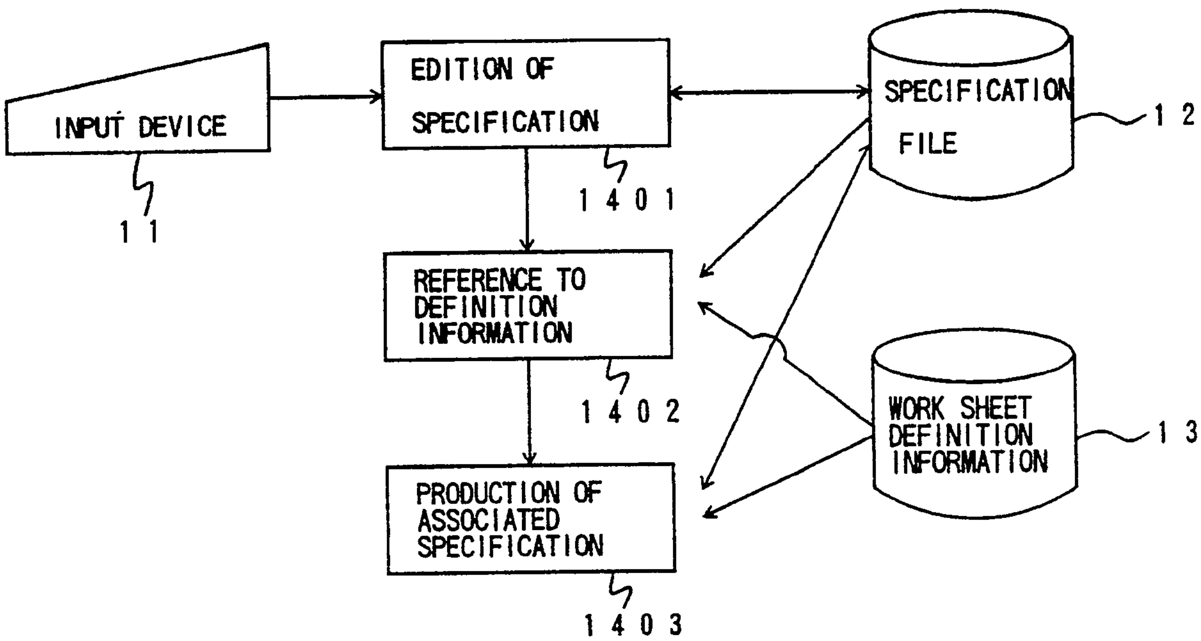
INPUT DEVICE
11
EDITION OF SPECIFICATION
1401
REFERENCE TO DEFINITION INFORMATION
1402
PRODUCTION OF ASSOCIATED SPECIFICATION
1403
SPECIFICATION FILE
12
WORK SHEET DEFINITION INFORMATION
13

# FIG. 15 A

1503 1504 1505

| B 3 | SETTING OF BUSINESS SPECIFICATION | | | | WORK SHEET | | B3. 4. 1 | OUTPUT INFORMATION LIST | |
|---|---|---|---|---|---|---|---|---|---|
| BUSINES NAME : | MANAGEMENT OF WAREHOUSING AND WAREHOUSE DELIVERY | | | | | | | | |
| ITEM No. | OUTPUT INFORMATION NAME | CODE | PURPOSE OF USE | CONTENTS (MAIN ITEMS) | OUTPUT MEANS | OUTPUT PLACE | OUTPUT CYCLE | DATA QUANTITY/ CYCLE (AVERAGE MAXIMUM) | RATE OF GROWTH A YEAR |
| 1 | WAREHOUSE-DELIVERY SLIP | P 0 2 | WAREHOUSE-DELIVERY WORK INSTRUCTION | WAREHOUSE-DELIVERY REQUEST No. PARTS NAME, QUANTITY, SENDING ADDRESSES, TIME LIMIT OF DELIVERY | TERMINAL PRINTER | PARTS CENTER | TWICE/ DAY. | | |
| 2 | WAREHOUSE-DELIVERY RESERVATION LIST | P 0 3 | NOTICE OF STOCK ABSENCE, CONFIRMATION OF RECEIPT OF WAREHOUSE-DELIVERY REQUEST | WAREHOUSE-DELIVERY REQUEST No. PARTS NAME, QUANTITY OF WAREHOUSE-DELIVER REQUEST, QUANTITY OF WAREHOUSE-DELIVERY REQUEST, QUANTITY OF ADVANCE-ORDER RECEIPT, QUANTITY OF SHORTAGE SCHEDULED DATE OF WAREHOUSING | 〃 | BUSINESS OFFICE | INSTANTLY | | |
| 3 | INPUT DATA RECEIPT ACTUAL RESULTS LIST | P 0 4 | FOR CHECKING OF NUMBER OF RECEIPT ON THE DAY | NUMBER OF INPUT DATA, NUMBER OF WAREHOUSE-DELIVERY RESERVATIONS | 〃 | 〃 | ONCE/DAY | | |
| 4 | ORDERING INSTRUCTION LIST | P 0 5 | BASIC MATERIALS FOR ORDERING | PARTS NAME, NUMBER OF ORDERS DESIRED TIME LIMIT OF DELIVERY | 〃 | 〃 | ONCE/5DAYS | | |
| 5 | STOCK STATUS | P 0 6 | GRASPING OF STOCK STATUS | PARTS NAME, QUANTITY OF PRESENT STOCK, QUANTITY OF ADVANCE ORDER, QUANTITY OF STOCK ABSENCE(SHORTAGE) | VDT | MATERIALS SECTION BUSINESS OFFICE | ANY TIME (ONE REQUEST) | | |
| 6 | WAREHOUSE-DELIVERY STATUS | P 0 7 | WAREHOUSE DELIVERY STATUS GRASPING | DATE OF WAREHOUSE-DELIVERY, QUANTITY OF WAREHOUSE-DELIVERY | VDT | SECTION BUSINESS OFFICE | ANY TIME (ONE REQUEST) | | |
| | | | | | | | | | |
| | | | | | | | | | |

FIG. 15 B

1501

| | PREPARATION | | PREPARATION DATE | | P. |
|---|---|---|---|---|---|
| | APPROVAL | | | | |

1506 1507

| ISSUANCE RESPONSIBLE POST | FORM: TYPE | FORM: SIZE | NUMBER OF COPIES | SENDING: ROUTE/ADDRESSEE | SENDING: MEANS | SENDING: TIME LIMIT | STORAGE: POST | STORAGE: PERIOD |
|---|---|---|---|---|---|---|---|---|
| | | | 2 | PARTS CENTER → BRANCH, BUSINESS OFFICE | TRACK | | | |
| | | | | — | — | — | PARTS CENTER | 1 MONTH |
| | | | 1 | BUSINESS OFFICE → REQUEST BRANCE/ BUSINESS OFFICE | FAX | INSTANTLY | | |
| | | | 1 | — | — | — | MATERIALS SECTION | 2 MONTHS |
| | | | 2 | MATERIALS SECTION → PURCHASING SECTION | EMPLOYEE MAGAZINE | 5/10th DAY 17:00 | PURCHASING SECTION | |
| | | | | — | — | — | MATERIALS SECTION | |
| — | — | — | — | — | — | — | — | — |
| — | — | — | — | — | — | — | — | — |
| | | | | | | | | |
| | | | | | | | | |

COMPLETION

1502

| FIG. 15A | FIG. 15B |
|---|---|

# FIG. 16

1601

INDEX DEFINITION *** BATCH MAP SPECIFICATION (MCREP1) : 1** (EAGLE2COB)

| | | | |
|---|---|---|---|
| SUMMARY | INPUT DATA RECEIPT ACTUAL RESULTS LIST ~1602 | | |
| COMMENTS | | | |
| FILE NAME | | NAME USED IN PROGRAM | |
| OUT ATTRIBUTES | | OUTPUT ATTRIBUTES OF *KANJI* PRINTER | |
| OUTPUT MEDIUM | 2~1603 | 1 : LINE PRINTER 2 : *KANJI* PRINTER | |
| NAME OF DUE FORM | | NAME OF FORM OVERLAY MODULE | |
| FCB NAME | | PAPER CONTROL IMAGE | |
| MAP SIZE | A3~1604 | PAGE SIZE (DESIRED CHARACTER-STRING) | |
| PERIOD | ONCE/DAY ~1605 | ALLOWABLE DAYS | |
| NUMBER OF COPIES | 1~1606 NUMBER OF PREPARATIONS | NUMBER OF OUTPUT PAGES | |
| PRINT LINE NUMBER/PAGE | | LINE NUMBER /PAGE | (INDISPENSABLE) |
| RECORD LENGTH | | LENGTH (BYTE NUMBER) OF ONE RECORD | (INDISPENSABLE) |
| RECORD NAME (MEMBER NAME) | | | |

FIG. 17

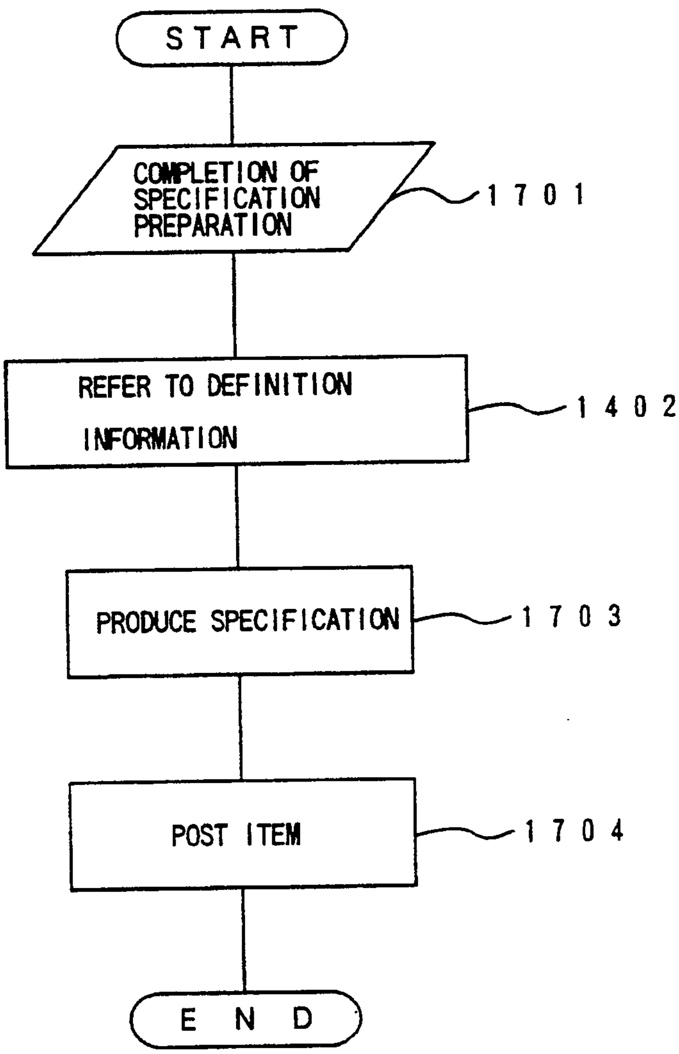
START
COMPLETION OF SPECIFICATION PREPARATION
1701
REFER TO DEFINITION INFORMATION
1402
PRODUCE SPECIFICATION
1703
POST ITEM
1704
END

FIG. 18

| ITEM NAME | RELATED WORK SHEET | ITEM NAME IN RELATED WORK SHEET |
|---|---|---|
| OUTPUT INFORMATION NAME | BATCH MAP SPECIFICATION | SUMMARY |
| OUTPUT MEANS | BATCH MAP SPECIFICATION | OUTPUT MEDIUM |
| | | |
| | | |
| | | |

1801

FIG. 19

| UPPER RANK WORK SHEET | LOWER RANK WORK SHEET | PRODUCTION TIMING |
|---|---|---|
| OUTPUT INFORMATION LIST | BATCH MAP SPECIFICATION | AT THE TIME OF REVIEW COMPLETION |
| | | |
| | | |
| | | |

1901

FIG. 20

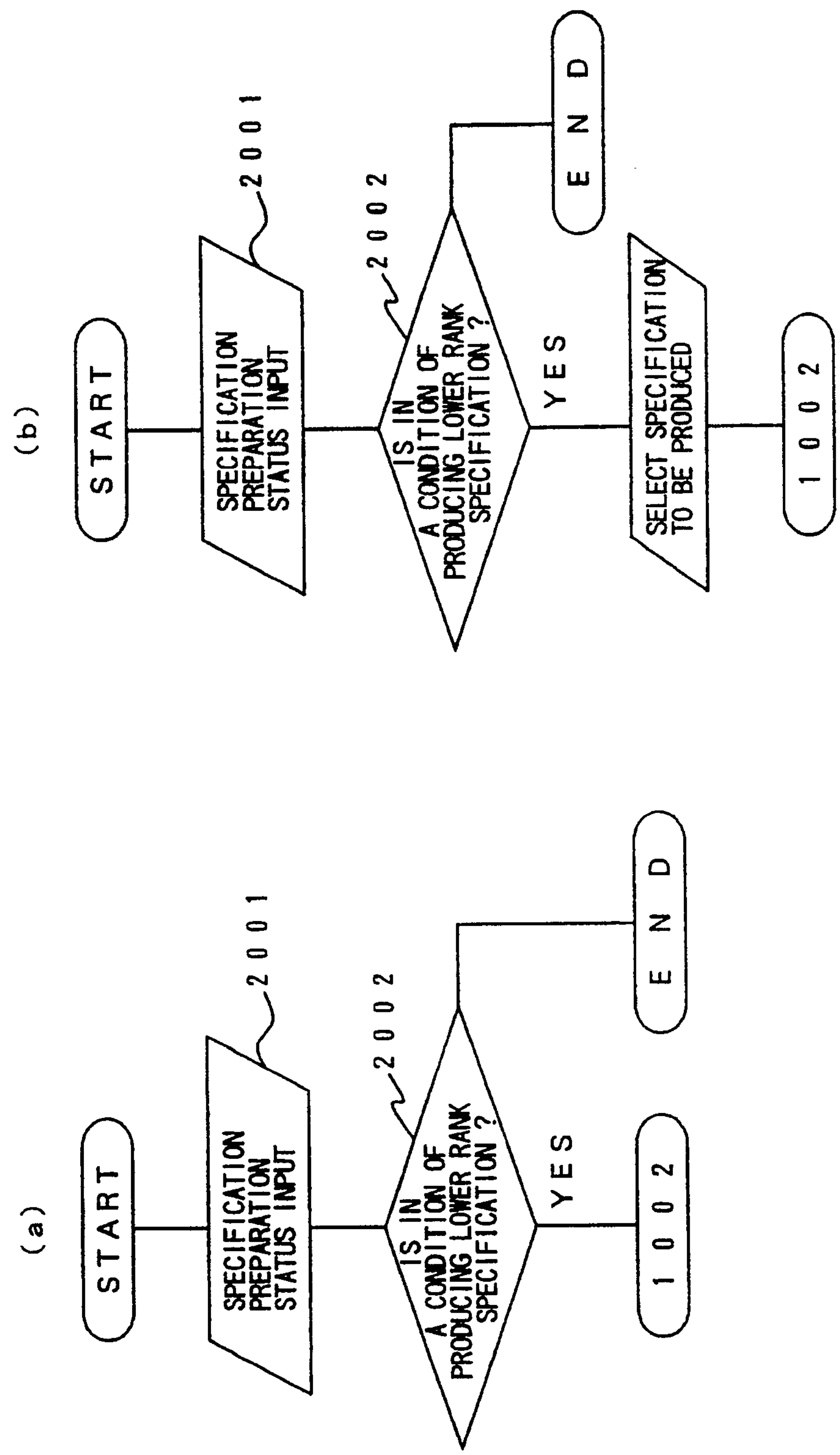
(a)
START
SPECIFICATION PREPARATION STATUS INPUT
2001
IS IN A CONDITION OF PRODUCING LOWER RANK SPECIFICATION ?
2002
YES
1002
END
(b)
START
SPECIFICATION PREPARATION STATUS INPUT
2001
IS IN A CONDITION OF PRODUCING LOWER RANK SPECIFICATION ?
2002
YES
SELECT SPECIFICATION TO BE PRODUCED
1002
END

FIG. 21

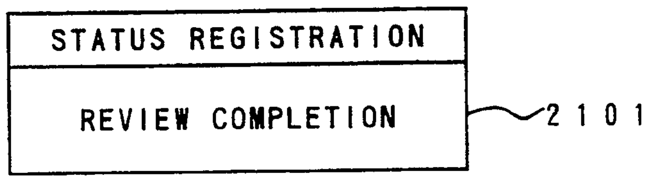


FIG. 22

| KIND OF WORK SHEET | SPECIFICATION NAME |
|---|---|
| SCREEN MAP SPECIFICATION | OUT-OF-WAREHOUSE SLIP |
| | OUT-OF WAREHOUSE LIST |
| | STOCK STATUS |
| | OUT-OF-WAREHOUSE STATUS |
| BATCH MAP SPECIFICATION | INPUT DATA RECEIPT ACTUAL RESULTS LIST |
| | ORDERING INSTRUCTION LIST |
| ⋮ | ⋮ |

EXECUTE | STOP

FIG. 23

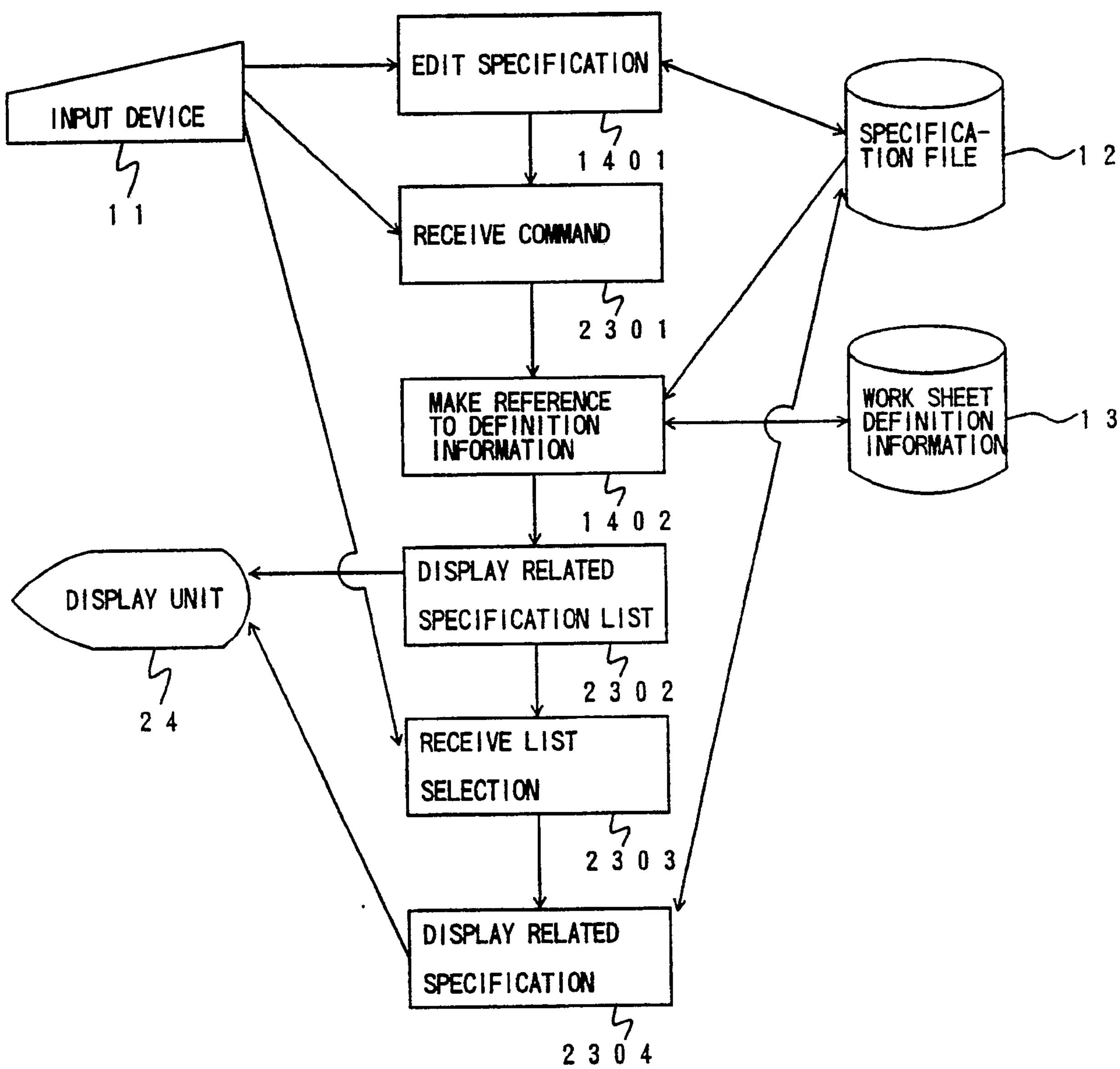
INPUT DEVICE
11
EDIT SPECIFICATION
1401
RECEIVE COMMAND
2301
MAKE REFERENCE TO DEFINITION INFORMATION
1402
DISPLAY RELATED SPECIFICATION LIST
2302
RECEIVE LIST SELECTION
2303
DISPLAY RELATED SPECIFICATION
2304
DISPLAY UNIT
24
SPECIFICATION FILE
12
WORK SHEET DEFINITION INFORMATION
13

FIG. 24

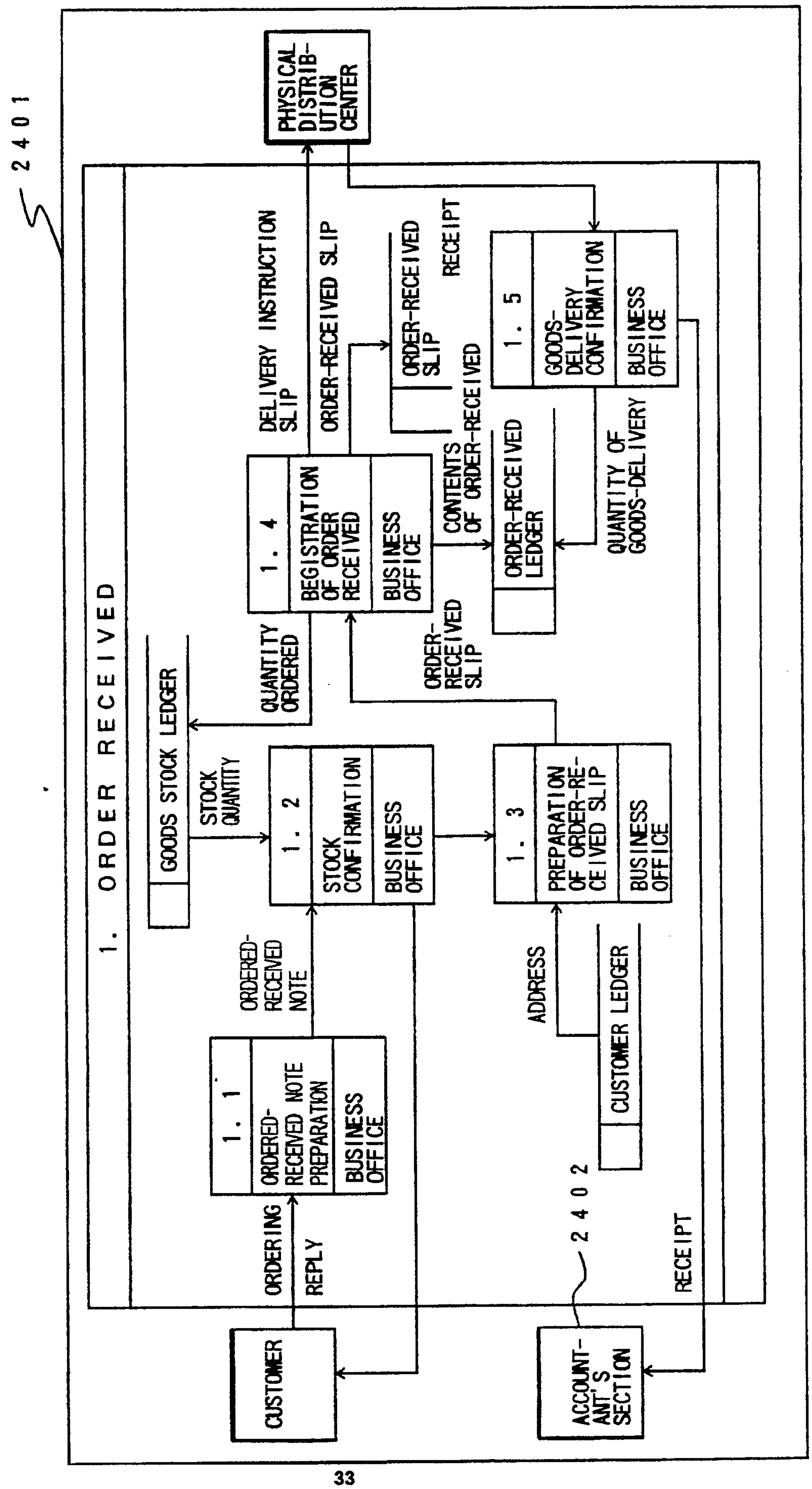
2401
1. ORDER RECEIVED
CUSTOMER
ORDERING
REPLY
1. 1
ORDERED-RECEIVED NOTE PREPARATION
BUSINESS OFFICE
ORDERED-RECEIVED NOTE
GOODS STOCK LEDGER
STOCK QUANTITY
1. 2
STOCK CONFIRMATION
BUSINESS OFFICE
QUANTITY ORDERED
1. 3
PREPARATION OF ORDER-RECEIVED SLIP
BUSINESS OFFICE
ADDRESS
CUSTOMER LEDGER
ORDER-RECEIVED SLIP
1. 4
REGISTRATION OF ORDER RECEIVED
BUSINESS OFFICE
DELIVERY INSTRUCTION SLIP
ORDER-RECEIVED SLIP
CONTENTS OF ORDER-RECEIVED
ORDER-RECEIVED LEDGER
ORDER-RECEIVED SLIP
RECEIPT
PHYSICAL DISTRIBUTION CENTER
1. 5
GOODS-DELIVERY CONFIRMATION
BUSINESS OFFICE
QUANTITY OF GOODS-DELIVERY
RECEIPT
2402
ACCOUNTANT'S SECTION

FIG. 25

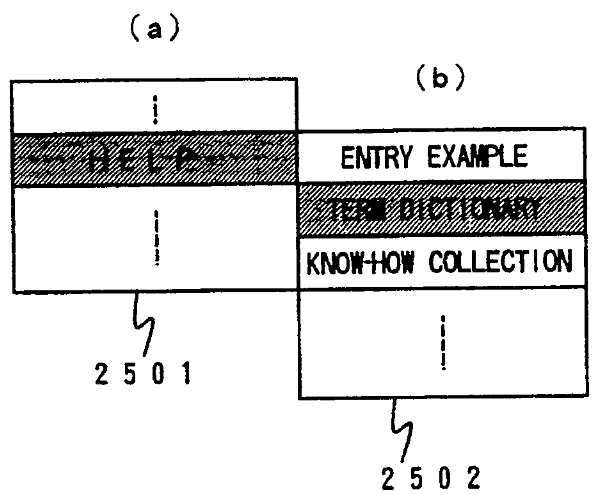
(a)
HELP
(b)
ENTRY EXAMPLE
TERM DICTIONARY
KNOW-HOW COLLECTION
2501
2502

FIG. 26

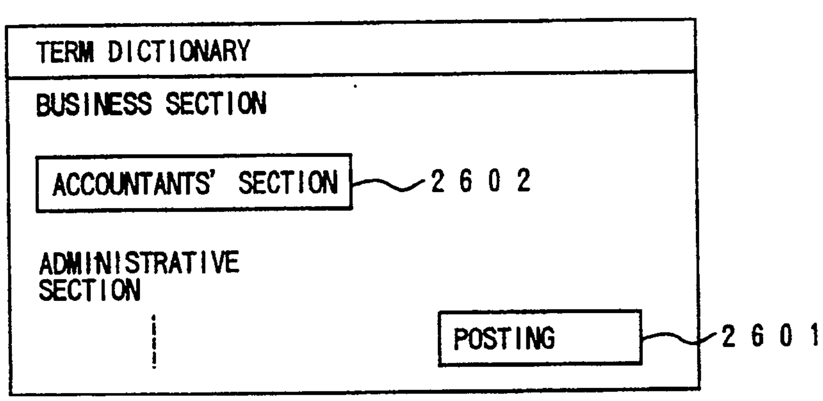
TERM DICTIONARY
BUSINESS SECTION
ACCOUNTANTS' SECTION
2602
ADMINISTRATIVE SECTION
POSTING
2601

FIG. 27

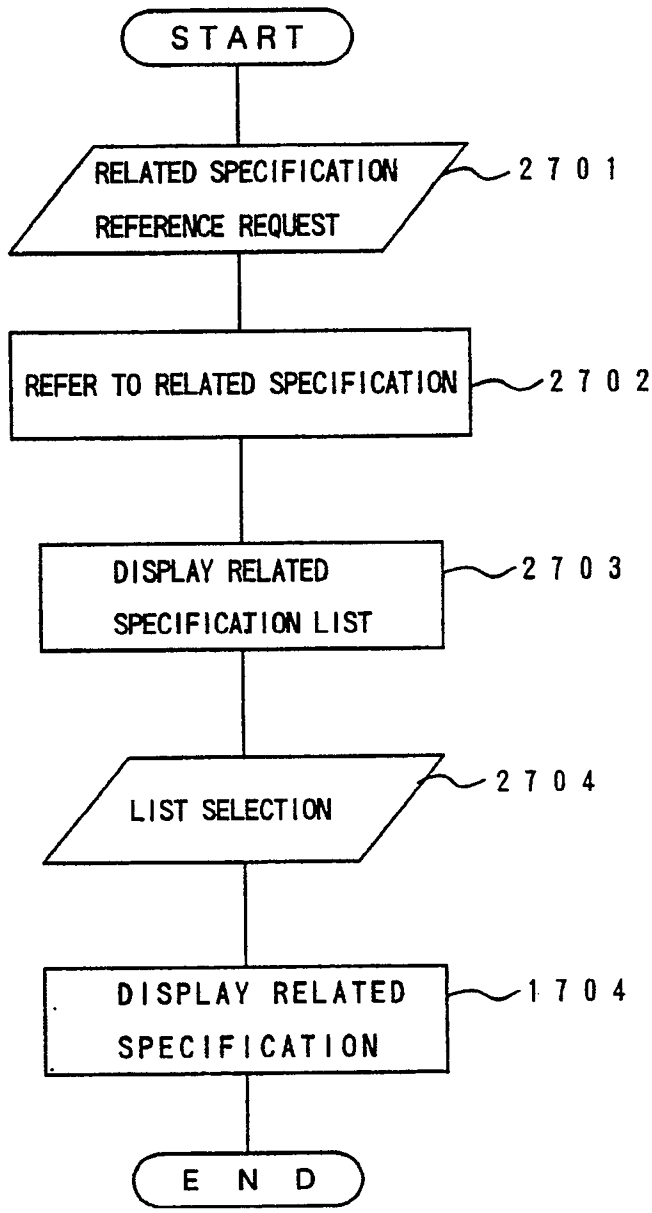
START
RELATED SPECIFICATION REFERENCE REQUEST
2701
REFER TO RELATED SPECIFICATION
2702
DISPLAY RELATED SPECIFICATION LIST
2703
LIST SELECTION
2704
DISPLAY RELATED SPECIFICATION
1704
END

FIG. 28

| WORK SHEET NAME | RELATED SPECIFICATION NAME |
|---|---|
| DATA FLOW DIAGRAM | EXAMPLE OF ENTRY |
| DATA FLOW DIAGRAM | TERM DICTIONARY |
| DATA FLOW DIAGRAM | KNOW-HOW COLLECTION |
| ⋮ | ⋮ |

FIG. 30

| MESSAGE |
|---|
| DESIGNATE DESTINATION REGION OF POSTING |

FIG. 29

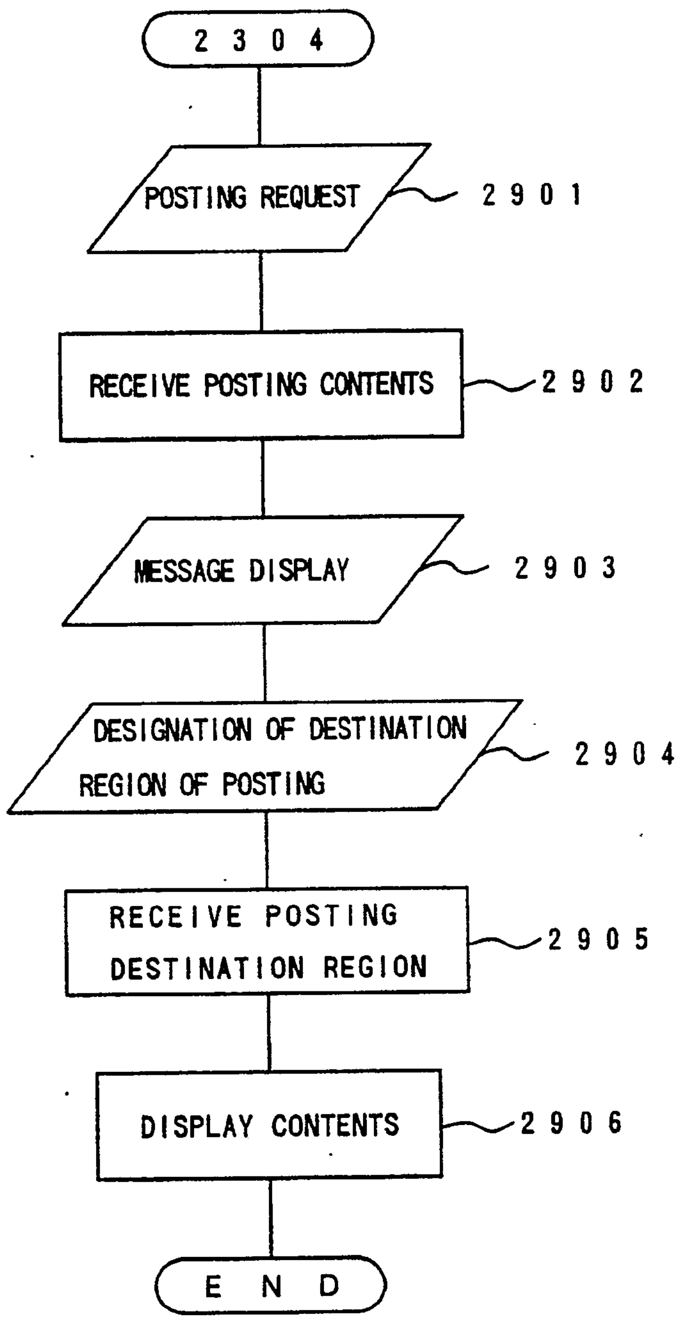
2304
POSTING REQUEST
2901
RECEIVE POSTING CONTENTS
2902
MESSAGE DISPLAY
2903
DESIGNATION OF DESTINATION REGION OF POSTING
2904
RECEIVE POSTING DESTINATION REGION
2905
DISPLAY CONTENTS
2906
END